(19) **Europäisches Patentamt**

**European Patent Office**

**Office européen des brevets**

(11) **EP 0 636 529 B1**

(12) **EUROPÄISCHE PATENTSCHRIFT**

(45) Veröffentlichungstag und Bekanntmachung des Hinweises auf die Patenterteilung:
**20.11.1996 Patentblatt 1996/47**

(51) Int. Cl.$^6$: **B62D 5/06**, G05D 7/01, F15B 11/04

(21) Anmeldenummer: **94110791.4**

(22) Anmeldetag: **12.07.1994**

(54) **Stromregelventil für Lenkhelfpumpen**

Flow control valve for pumps of power-assisted steering

Soupape de réglage de débit pour pompes de direction assistée

(84) Benannte Vertragsstaaten:
**DE FR GB IT**

(30) Priorität: **27.07.1993 DE 4325113**

(43) Veröffentlichungstag der Anmeldung:
**01.02.1995 Patentblatt 1995/05**

(73) Patentinhaber: **LuK Fahrzeug-Hydraulik GmbH & Co. KG**
**D-61352 Bad Homburg (DE)**

(72) Erfinder:
• **Körtge, Randolf**
**D-61250 Usingen (DE)**

• **Lauth, Hans-Jurgen**
**D-61250 Usingen (DE)**

(74) Vertreter: **Grosse, Rainer, Dipl.-Ing. et al**
**Gleiss & Grosse**
**Patentanwaltskanzlei,**
**Maybachstrasse 6A**
**70469 Stuttgart (DE)**

(56) Entgegenhaltungen:
DE-B- 1 167 669      GB-A- 1 077 319
US-A- 3 163 006      US-A- 3 983 893

• PATENT ABSTRACTS OF JAPAN vol. 7, no. 16 (M-187) 22. Januar 1983 & JP-A-57 172 878 (KOYO SEIKO KK) 23. Oktober 1982

**Beschreibung**

Die Erfindung betrifft ein Stromregelventil für Lenkhelfpumpen gemäß Oberbegriff des Anspruchs 1. Stromregelventile der hier angesprochenen Art dienen dazu, den von einer Lenkhelfpumpe zur Lenkung beziehungsweise dem Lenkgetriebe der Lenkung beispielsweise eines Kraftfahrzeuges zur Verfügung gestellten Fluidstrom auf einen gewünschten Wert von beispielsweise 8 l/min zu regeln.

Bekannte Stromregelventile (DE-B-1 167 669) weisen einen in einer Ventilbohrung beweglich gelagerten Steuerkolben auf, der einerseits mit dem von der Lenkhelfpumpe zur Verfügung gestellten Druck und andererseits mit dem an das Lenkgetriebe abgegebenen Druck beaufschlagt ist. In die Ventilbohrung münden Kanäle, durch die der von der Lenkhelfpumpe erzeugte Druck in eine erste Druckkammer geführt wird und durch die das von der Pumpe gelieferte Medium bei Aktivierung des Stromregelventils abgeleitet werden kann zu einem Bereich mit niedrigerem Druckniveau, zu einem Tank oder einem sogenannten Booster-Kanal, der eine unmittelbare Verbindung von der Druckseite der Pumpe zu deren Ansaugbereich bildet. In der Ruhelage des Steuerkolbens ist die Fluid-Verbindung zwischen der mit dem Pumpendruck beaufschlagten Druckkammer und dem Bereich niedrigeren Druckniveaus abgeschlossen. Die mit den verschiedenen Druckniveaus beaufschlagten Flächen des Steuerkolbens bilden Druckwaagenflächen unterschiedlicher Größe. Bei der Verwendung derartiger Stromregelventile müssen Leitungen vorgesehen werden, die die Druckwaagenflächen mit den verschiedenen Druckniveaus verbinden. Es bedarf also eines aufwendigen Leitungssystems, um derartige Stromregelventile zu verwenden. Es ist auch möglich, Stromregler der hier angesprochenen Art in ein Gehäuse unterzubringen, das von verschiedenen Kanälen durchzogen ist, um die Druckwaagenflächen mit den verschiedenen Druckniveaus zu verbinden. Eine derartige Realisierung ist sehr aufwendig und kostenintensiv.

Es ist daher Aufgabe der Erfindung, ein Stromregelventil für Lenkhelfpumpen bereitzustellen, das einfach aufgebaut ist.

Diese Aufgabe wird mit Hilfe eines Stromregelventils gelöst, das die in Anspruch 1 genannten Merkmale aufweist. Das Stromregelventil weist zwei Druckwaagenflächen auf, von denen die erste mit dem von der Lenkhelfpumpe erzeugten Druck und die zweite von dem dem Lenkgetriebe zugeführten Druck beaufschlagbar ist. Die zweite Druckwaagenfläche wird unmittelbar über einen den Steuerkolben durchdringenden Druckkanal mit dem dem Lenkgetriebe zugeführten Druck beaufschlagt, so daß aufwendige externe Leitungssysteme oder kostspielige Bohrungen in ein Gehäuse, in dem der Steuerkolben untergebracht ist, entfallen können.

Weitere Ausgestaltungen des Stromregelventils ergeben sich aus den übrigen Unteransprüchen. Als besonders vorteilhaft erweist sich, daß das Stromregelventil als Sitz-, Schieber- oder Sitz-Schieber-Ventil ausgebildet sein kann, also universell einsetzbar ist.

Die Erfindung wird im folgenden anhand der Zeichnung näher erläutert. Es zeigen:

| | |
|---|---|
| Figur 1 | ein erstes Ausführungsbeispiel eines als Sitzventil ausgebildeten Stromregelventils; |
| Figur 2 | ein zweites Ausführungsbeispiel eines als Sitzventil ausgebildeten Stromregelventils; |
| Figur 3 | ein drittes Ausführungsbeispiel eines Stromregelventils, das im inaktivierten Zustand als Sitzventil und im aktivierten Zustand als Schieberventil wirkt; |
| Figur 4 | ein weiteres Ausführungsbeispiel eines Stromregelventils, das als Sitz-Schieber-Ventil ausgebildet ist; |
| Figur 5 | ein weiteres Ausführungsbeispiel eines als Schieber-Ventil ausgebildeten Stromregelventils; |
| Figur 6 | ein weiteres Ausführungsbeispiel eines als Sitzventil ausgebildeten Stromregelventils und |
| Figur 7 und 8 | Diagramme, die den von einer Lenkhelf-pumpe geförderten Volumen-Strom in Abhängigkeit von der Drehzahl einer die Lenkhelfpumpe antreibenden Brennkraftmaschine zeigen. |

Das im folgenden beschriebene Stromregelventil ist für Lenkhelfpumpen geeignet, die beispielsweise in Kraftfahrzeugen eingesetzt und von der Brennkraftmaschine des Fahrzeugs angetrieben werden. Die spezielle Ausgestaltungsform der Lenkhelfpumpe spielt für die Funktion des Stromregelventils keine Rolle. Wesentlich ist lediglich, daß das Stromregelventil im aktivierten Zustand eine Fluid-Verbindung zwischen dem von der Lenkhelfpumpe an die Lenkung beziehungsweise das Lenkgetriebe abgegebenen Fluidstrom und einem Bereich niedrigen Druckniveaus öffnet und so ein weiteres Zunehmen des an den Verbraucher abgegebenen Fluidstroms verhindert.

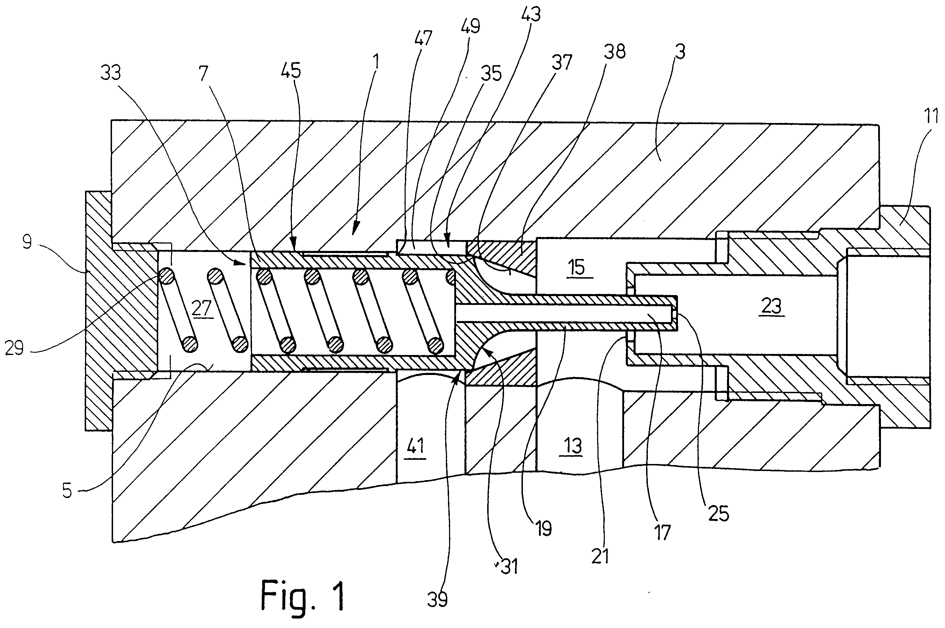

Figur 1 zeigt ein erstes Ausführungsbeispiel eines Stromregelventils 1, das in dem Gehäuse 3 einer Lenkhelfpumpe untergebracht ist. Das Gehäuse 3 ist dazu mit einer Ventilbohrung 5 versehen, in der ein Steuerkolben 7 des Stromregelventils 1 verschiebbar gelagert ist. Die Ventilbohrung 5 ist einerseits durch einen Verschlußstopfen 9 abgeschlossen und andererseits mit einem Verbindungsstopfen 11 versehen, an der der Verbraucher, hier also das Lenkgetriebe der Lenkhelfpumpe anschließbar ist. In die Ventilbohrung 5 mündet einerseits ein als Druckkanal 13 bezeichneter erster Kanal, über den das von der Lenkhelfpumpe erzeugte Fluid in die Ventilbohrung einströmt, die im Mündungsbereich des Druckkanals 13 eine erste Druckkammer 15 bildet. In der ersten Druckkammer 15 liegt also der von der Lenkhelfpumpe erzeugte Druck an.

2

Der Steuerkolben 7 weist einen mit einem Durchgangskanal 17 versehenen Fortsatz 19 auf, der durch eine Öffnung 21 in den Innenraum 23 des Verbindungsstopfens 11 ragt. Der Durchgangskanal 17 mündet über eine als Vorsteuerdrossel 25 beziehungsweise Dämpfungsdüse dienende kleine Öffnung in den Innenraum 23 des Verbindungsstopfens 11. Die Öffnung 21 ist so groß ausgebildet, daß zwischen der Außenfläche des Fortsatzes 19 und der Randbegrenzung der Öffnung 21 eine Förderstromdrossel gegeben ist.

Der Durchgangskanal 17 stellt eine den Steuerkolben 7 durchdringende Verbindung zwischen dem Innenraum 23, in dem der am Verbraucher beziehungsweise am Lenkgetriebe anliegende Druck herrscht, und der Rückseite des Steuerkolbens 7 dar, wo zwischen der Rückseite des Steuerkolbens und dem Verschlußstopfen 9 eine zweite Druckkammer 27 ausgebildet ist, in der durch die Verbindung über den Durchgangskanal 17 zum Innenraum 23 im Verbindungsstopfen 11 ebenfalls der am Lenkgetriebe wirkende Druck herrscht. Die Funktion des Stromregelventils wird nicht verändert, wenn auf andere Weise, beispielsweise durch im Gehäuse verlaufende Verbindungskanäle der im Innenraum 23 herrschende Druck zur zweiten Druckkammer 27 geleitet wird.

Der Steuerkolben 7 wird von einem als Schraubenfeder 29 ausgebildeten elastischen Element, welches sich einerseits am Verschlußstopfen 9 und andererseits am Steuerkolben 7 abstützt, mit einer Federkraft beaufschlagt, die von links nach rechts wirkt. Auch der in der zweiten Druckkammer 27 herrschende Druck bewirkt eine von links nach rechts wirkende Druckkraft, die zu der von der Schraubenfeder 29 erzeugten Kraft gleichgerichtet ist. Dieser Druckkraft wirkt der in der ersten Druckkammer 15 herrschende Druck entgegen. Der Steuerkolben 7 bildet also eine Druckwaage, wobei die rechte Stirnfläche des Steuerkolbens 7 als erste Druckwaagenfläche 31 und die linke Stirnseite des Steuerkolbens 7 als zweite Druckwaagenfläche 33 bezeichnet wird. Die zweite Druckwaagenfläche 33 wird hydraulisch nicht dadurch verändert, daß der Steuerkolben 7 zur Aufnahme der Schraubenfeder 29 hohl ausgebildet ist und die Schraubenfeder von links in das Innere des Steuerkolbens 7 hineinragt.

Im Bereich der ersten Druckwaagenfläche 31 ist der Steuerkolben 7 mit einer umlaufenden Kante 35 versehen, die mit einer ebenfalls umlaufenden, sich in Richtung zur Kante 35 konisch öffnenden Schrägfläche 37 zusammenwirkt. Die Schrägfläche 37 ist Teil eines Ventilrings 38, der in die Ventilbohrung 45 eingesetzt ist; die Schrägfläche bildet gemeinsam mit der Kante 35 ein Sitzventil 39. Dieses unterbricht in Ruhelage des Steuerkolbens 7, das heißt, bei Anlage der Kante 35 an der Schrägfläche 37 die Fluid-Verbindung zwischen der ersten Druckkammer 15 und einem als Booster-Kanal 41 bezeichneten Kanal, der zu einem Bereich niedrigen Druckniveaus führt, also zu einem Bereich, in dem ein Druck herrscht, der niedriger ist als der in der ersten Druckkammer 15. Hier führt der Booster-Kanal 41 zur Ansaugseite der Pumpe. Denkbar wäre auch eine Verbindung beispielsweise zum Tank der Pumpe.

Der Steuerkolben 7 weist einen bis zur Kante 35 durchgehenden ersten Bereich 43 und einen zweiten Bereich 45 auf, der sich bis zur zweiten Druckwaagefläche 33 erstreckt. Der Außendurchmesser im ersten Bereich 43 ist kleiner als der im zweiten Bereich 45, so daß in einem Abstand zur Kante 35 eine Stufe 47 ausgebildet ist.

Der erste Bereich 43 des Steuerkolbens 7 ist von einem Ringraum 49 umgeben, der Teil der Ventilbohrung 5 ist, und mit dem Booster-Kanal 41 verbunden ist. Der Ringraum 49 wird einerseits von dem Sitzventil 39 abgeschlossen und andererseits dadurch, daß der zweite Bereich 45 des Steuerkolbens 7 dichtend an der Innenfläche der Ventilbohrung 5 anliegt.

Die Größe der ersten Druckwaagenfläche 31 wird durch die Kante 35 des Sitzventils 39 bestimmt. Die von der Kante 35 umschriebene Fläche, die zur ersten Druckkammer 15 gerichtet ist, wird mit dem dort herrschenden Druck beaufschlagt und wird als erste Druckwaagenfläche 31 bezeichnet.

Sobald der Steuerkolben 7 aus seiner Ruhelage heraus nach links bewegt wird, wird eine Verbindung zwischen der ersten Druckkammer 15 und dem Booster-Kanal 41 sowie mit dem Ringraum 49 geschaffen, wobei allerdings der in der ersten Druckkammer 15 herrschende Druck abgebaut wird. Jenseits der Kante 35, das heißt, links von dieser Kante, herrscht nicht mehr der Druck in der ersten Druckkammer 15, sondern der im Booster-Kanal 41 gegebene Druck. Das heißt, auch die durch die Stufe 47 im Übergangsbereich zwischen dem ersten Bereich 43 und dem zweiten Bereich 45 gegebene Ringfläche wird nur mit dem im Booster-Kanal 41 herrschenden Druck beaufschlagt.

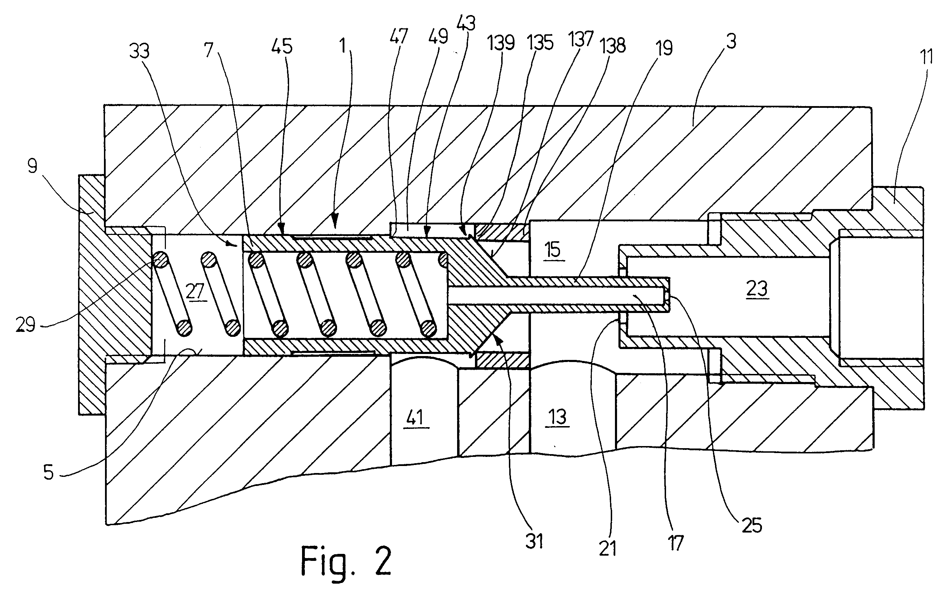

Figur 2 zeigt ein zweites Ausführungsbeispiel eines Stromregelventils 1, welches als Sitzventil wirkt. Gleiche Teile sind mit gleichen Bezugsziffern versehen, so daß insofern auf die Beschreibung gemäß Figur 1 verwiesen werden kann.

Das Stromregelventil gemäß Figur 2 unterscheidet sich von dem in Figur 1 dargestellten lediglich dadurch, daß das Sitzventil 139 quasi komplementär ausgebildet ist wie das in Figur 1 dargestellte Sitzventil 39. Der Ventilring 138 ist in Figur 2 mit einer Kante 135 ausgebildet, die mit einer an der Stirnseite des Steuerkolbens 7 vorhandenen Schrägfläche 137 zusammenwirkt, so daß das Sitzventil 139 entsteht. Es trennt die Fluid-Verbindung zwischen der ersten Druckkammer 15, die mit dem von der Lenkhelfpumpe erzeugten Druck beaufschlagt wird, von dem Ringraum 39, der über den Booster-Kanal 41 mit einem niedrigeren Druckniveau, hier mit der Ansaugseite der Lenkhelfpumpe verbunden ist. Im Ruhezustand des Steuerkolbens 7 ist das Sitzventil 139 -wie das Sitzventil 39 in Figur 1- geschlossen, so daß die Fluid-Verbindung unterbrochen ist.

Auch der in Figur 2 dargestellte Steuerkolben 7 weist einen ersten Bereich 43 und einen zweiten bis zur zweiten Druckwaagefläche 33 durchgehenden Bereich 45 auf, wobei der erste Bereich 43 einen geringeren Außendurchmesser hat als der zweite Bereich 45.

Bei beiden in den Figuren 1 und 2 dargestellten Ausführungsbeispielen reicht der erste Bereich 43 mit dem geringeren Außendurchmesser bis unmittelbar an das Sitzventil 39 beziehungsweise 139 heran, das heißt, sobald das Sitzventil öffnet, besteht eine Verbindung zwischen der ersten Druckkammer 15 und den Ringraum 49, wodurch das Sitzventil-Verhalten des Stromregelventils 1 gegeben ist. Das heißt, die Fluid-Verbindung zwischen der ersten Druckkammer 15 und dem Ringraum 49 beziehungsweise dem Booster-Kanal 41 wird ausschließlich durch die sich öffnende Ringfläche des Sitzventils bestimmt, wenn der Steuerkolben 7 aktiviert wird.

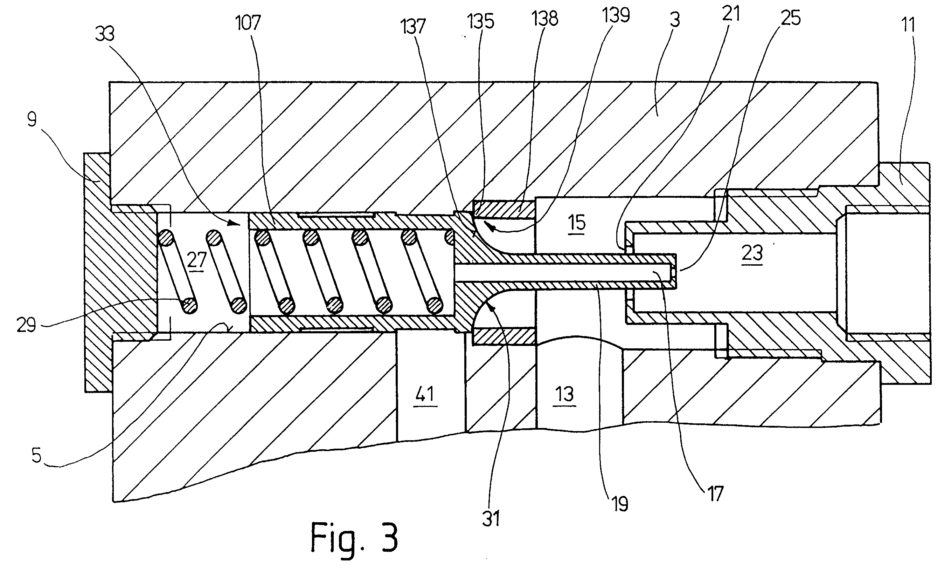

Figur 3 zeigt ein weiteres Ausführungsbeispiel eines Stromregelventils, bei dem Teile, die mit denen anhand der von Figur 1 und 2 beschriebenen Ausführungsformen übereinstimmen, gleiche Bezugsziffern haben, so daß auf deren ausführliche Beschreibung verzichtet werden kann.

Der Steuerkolben 107 weist über seine gesamte in der Ventilbohrung 5 liegende Länge, das heißt von seinem hinteren linken Ende im Bereich der zweiten Druckwaagefläche 33 bis zu einer Schrägflache 137, die mit einer Kante 135 eines Ventilrings 138 ein Sitzventil 139 bildet, einen konstanten Außendurchmesser auf, wobei aus der Figur 3 ersichtliche umlaufende Ringnuten, die lediglich der Führung und Entlastung dienen, keine Auswirkung auf das Regelverhalten des Stromregelventils 1 haben.

Das Stromregelventil 1 gemäß Figur 3 zeichnet sich dadurch aus, daß die rechte Stirnseite des Steuerkolbens 107 in der Ruhelage des Steuerkolbens die erste Druckwaagenfläche 31 bildet, die kleiner ist als die linke Endfläche des Steuerkolbens 107, die die zweite Druckwaagenfläche 33 bildet. Die Größe der ersten Druckwaagenfläche wird bestimmt durch die Kante 135, die als umlaufende Ringkante ausgebildet ist, wobei der Durchmesser der Ringkante kleiner ist als der Durchmesser der Ventilbohrung 5, so daß eben die Fläche der ersten Druckwaagenfläche 31 kleiner ist als die der zweiten Druckwaagenfläche 33.

Das Stromregelventil 1 gemäß Figur 3 zeichnet sich dadurch aus, daß in der Ruhelage des Steuerkolbens 107 eine Leckage im Bereich der Fluid-Verbindung zwischen der mit dem Pumpendruck beaufschlagten ersten Druckkammer 15 und dem Booster-Kanal 41 durch das Sitzventil 139 vermieden wird.

Sobald aufgrund der vorgegebenen Druckverhältnisse der Steuerkolben 107 aus seiner Ruhelage heraus nach links verlagert wird, kann der in der ersten Druckkammer 15 herrschende Druck auf die von der Kante 135 abgehobene Schrägflache 137 wirken, deren Durchmesser dem der Ventilbohrung 5 entspricht. Die nach dem Verlassen der Ruhelage tatsächlich mit dem in der ersten Druckkammer 15 herrschenden Druck beaufschlagte rechte Stirnfläche des Steuerkolbens 107 ist nun also ebenso groß wie die zweite Druckwaagenfläche 33. Das heißt also, die Flächenunterschiede zwischen der ersten Druckwaagenfläche 31 und der zweiten Druckwaagenfläche 33 sind nur solange gegeben, wie der Steuerkolben 107 sich in seiner Ruhelage befindet und das Sitzventil 139 geschlossen ist.

In der Ruhelage bildet also die rechte Seite des Steuerkolbens 107 mit dem Ventilring 138 ein Sitzventil aus. Sobald der Steuerkolben 107 die Ruhelage verlassen hat, wirkt das Stromregelventil 1 als reines Schieberventil, wobei die rechte Kante des Steuerkolbens, die durch die gedachte Schnittlinie der Schrägfläche 137 mit der Oberfläche der Ventilbohrung 5 entsteht, als aktive Steuerkante wirkt, während diese über die Mündung des Booster-Kanals 41 in die Ventilbohrung 5 bewegt wird.

Umgekehrt gilt, daß das als Schieber-Ventil wirkende Steuerventil 1 wiederum als Sitzventil wirkt, sobald die Schrägfläche 137 an der umlaufenden Kante 135 des Ventilrings 138 anschlägt.

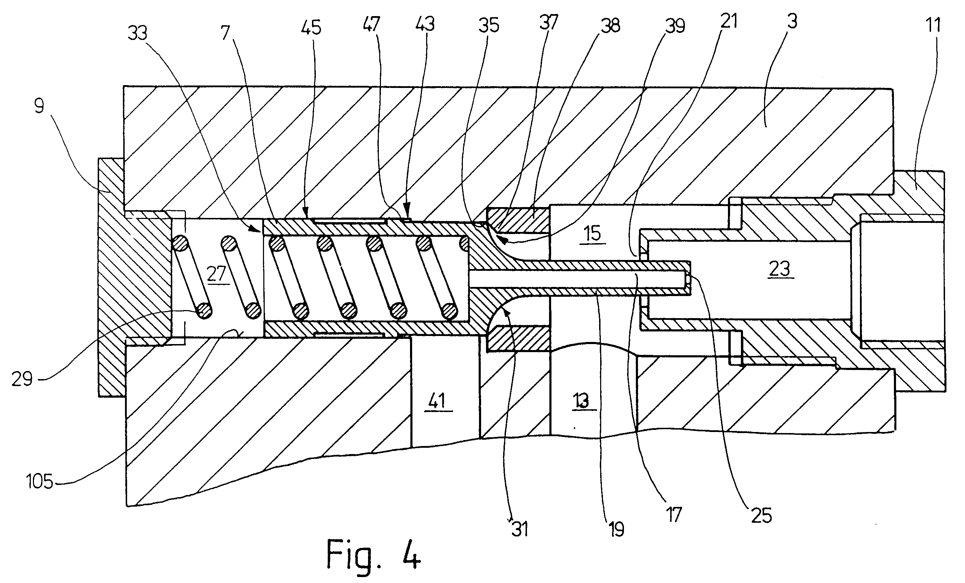

Figur 4 zeigt ein weiteres Ausführungsbeispiel eines Stromregelventils. Teile, die bereits anhand der Figuren 1 bis 3 erläutert wurden, sind mit gleichen Bezugsziffern versehen, so daß auf die vorangegangene Beschreibung verwiesen werden kann.

Das Stromregelventil 1 zeichnet sich durch ein Sitz-Schieber-Ventilverhalten aus. Der Steuerkolben 7 weist, wie der anhand der Figuren 1 und 2 erläutert, einen ersten Bereich 43 und einen zweiten Bereich 45 auf, wobei der erste Bereich 43 einen kleineren Außendurchmesser hat als der zweite Bereich 45, so daß eine Stufe 47 gebildet wird. Bei dem hier dargestellten Ausführungsbeispiel ist jedoch die Ventilbohrung 5 im Bereich des Steuerkolbens 7 als Stufenbohrung ausgebildet, wobei im Bereich des ersten Bereichs 43 der Innendurchmesser der Bohrung geringer ist als im Bereich des zweiten Bereichs 45 des Steuerkolbens 7.

Auf der rechten Seite des Steuerkolbens 7 ist wiederum ein Sitzventil 39 ausgebildet, das heißt, der Steuerkolben weist eine Kante 35 auf, die mit einer Schrägfläche 37 eines Ventilrings 38 zusammenwirkt. Das Sitzventil 39 ist geschlossen, wenn sich der Steuerkolben 7 in seiner Ruhelage, also in Berührung mit dem Ventilring 38 befindet.

Die rechte der ersten Druckkammer 15 zugewandte Stirnseite des Steuerkolbens 7 bildet die erste Druckwaagenfläche 31. Da der erste Bereich 43 des Steuerkolbens 7 sich bis zur Kante 35 fortsetzt, wird die Größe der ersten Druckwaagenfläche 31 durch den kleineren Außendurchmesser im ersten Bereich 43 bestimmt. Entsprechend wird die Größe der zweiten Druckwaagenfläche 33 bestimmt durch den größeren Außendurchmesser im zweiten Bereich 45 des Steuerkolbens 7.

In der Ruhelage des Steuerkolbens ist, wie gesagt, das Sitzventil 39 geschlossen. Bewegt sich der Steuerkolben 7 aus seiner Ruhelage nach links, öffnet das Sitzventil 39. Die rechte Stirnfläche des Steuerkolbens 7, also dessen erste Druckwaagenfläche 31, ändert jedoch ihren Querschnitt nach dem Öffnen des Sitzventils 39 nicht, weil hier der Außendurchmesser des Steuerkolbens 7 im ersten Bereich 43 reduziert ist. Nach dem öffnen des Sitzventils 39 verhält

4

sich daher das Stromregelventil 1 als reines Schieber-Ventil, während die Kante 35 die Mündungsfläche des Booster-Kanals 41 überstreicht.

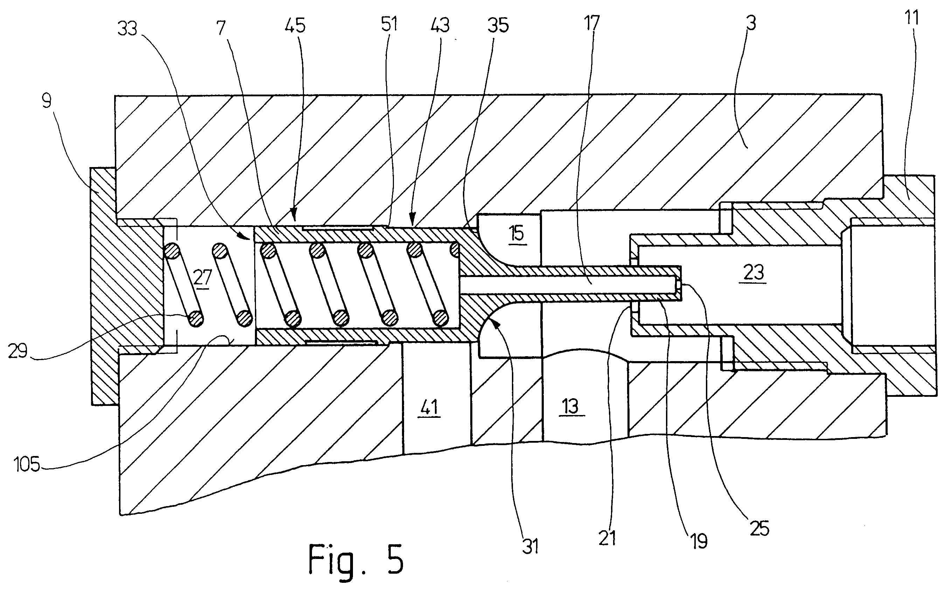

Figur 5 zeigt schließlich ein Ausführungsbeispiel eines Stromregelventils, das als reines Schieberventil wirkt. Das heißt, der in Figur 4 dargestellte Ventilring 38 entfällt hier. Ansonsten ist das Stromregelventil 1 identisch ausgebildet wie das in Figur 4 dargestellte. Insbesondere ist der Steuerkolben 7 mit einem bis zur ersten Druckwaagefläche reichenden ersten Bereich 43 und einem sich bis zur zweiten Druckwaagefläche erstreckenden zweiten Bereich 45 ausgestattet, wobei der Außendurchmesser im ersten Bereich 43 geringer ist als im zweiten, so daß eine Stufe 47 gegeben ist. Entsprechend ist die Ventilbohrung 105 als Stufenbohrung ausgebildet, wobei der dem ersten Bereich 43 zugeordnete Abschnitt einen geringeren Innendurchmesser aufweist als der Abschnitt der Ventilbohrung, der dem zweiten Bereich 45 zugeordnet ist.

Der Steuerkolben 7 schlägt mit der zwischen dem ersten Bereich 43 und dem zweiten Bereich 45 vorgesehenen Stufe 47 an einen Anschlag 51 an, der bei der Herstellung der Stufenbohrung entsteht. In Figur 1 befindet sich der Steuerkolben 1 in seiner Ruhelage, wobei die Fluid-Verbindung zwischen der mit dem Pumpendruck beaufschlagten ersten Druckkammer 15 und dem Booster-Kanal 41 dadurch dicht abgeschlossen ist, daß die Außenfläche des ersten Bereichs 43 an der Innenfläche der Ventilbohrung 105 dichtend anliegt und dabei die Mündung des Booster-Kanals 41 abschließt.

Sobald der Steuerkolben 7 aus seiner Ruheposition nach links verlagert wird, überschreitet die die rechte Stirnfläche des Steuerkolbens begrenzende Kante 35 die Mündungsflache des Booster-Kanals 41, so daß die Fluid-Verbindung zur ersten Druckkammer 15 freigegeben wird. Es wird deutlich, daß das Stromregelventil 1 hier als reines Schieber-Ventil wirkt, da der Kante 35 keine Schrägfläche eines Ventilrings zugeordnet ist.

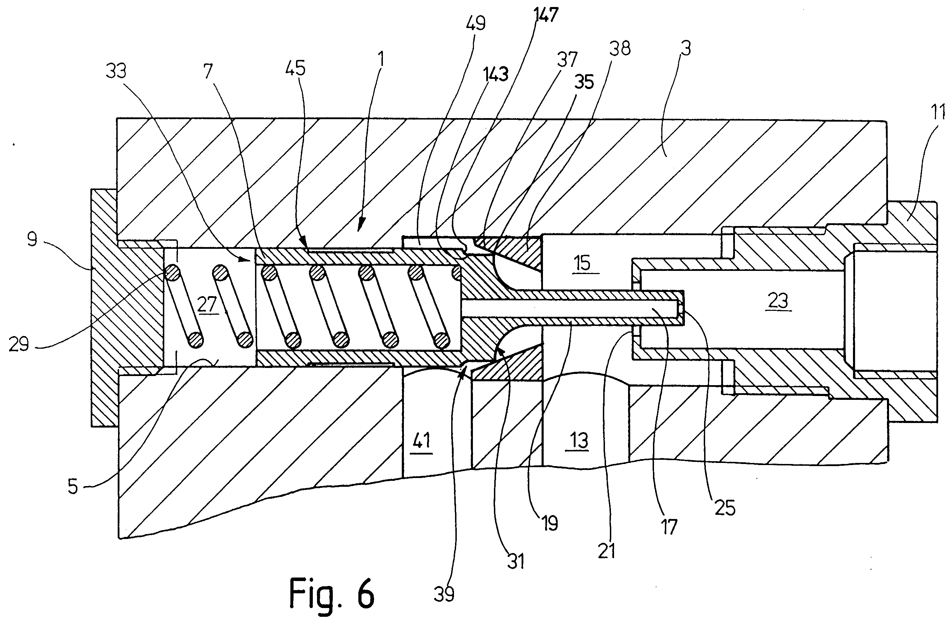

In der Figur 6 ist ein weiteres Ausführungsbeispiel eines Stromregelventils 1 gezeigt. Gleiche Teile wie in den vorhergehenden Figuren sind mit gleichen Bezugszeichen versehen und nicht nochmals erläutert.

Das in der Figur 6 gezeigte Stromregelventil 1 wirkt ebenfalls als Sitzventil 39. Das Sitzventil 39 wird hier durch die obenlaufende Kante 35 des Steuerkolbens 7 gebildet. Die Kante 35 wirkt mit der Schrägfläche 37 des Ventilrings 38 zusammen. Die von der Kante 35 umschriebene Fläche ergibt die zu der Druckkammer 15 hingerichtete erste Druckwaagenfläche 31. Zur Ausbildung der Kante 35 besitzt der Steuerkolben 7 an seiner dem Ventilring 38 zugewandten Seite eine obenlaufende Ringstufe 143. Die Ringstufe 143 wird beispielsweise von einer Freidrehung des Steuerkolbens 7 gebildet. Die Ringstufe 143 besitzt bei ihrem Übergang von dem Bereich 45 des Steuerkolbens 7 einen konischen Verlauf, so daß der Durchmesser des Steuerkolbens 7 von dem Bereich 45 zu der Ringstufe 143 nicht abrupt abfällt. Die axiale Länge der Ringstufe 143 ist so gewählt, daß die Kante 35 -in Ruhestellung des Steuerkolbens 7- an der Schrägfläche 37 anliegt und der konisch verlaufende Übergang zu dem Bereich 45 des Steuerkolbens 7 im Bereich des Booster-Kanals 41 liegt. Der Übergang von dem Bereich 45 zu der Ringstufe 143 bildet somit eine konisch verlaufende Ringfläche 147. Durch die Ausbildung der Ringstufe 143 läßt sich ein Flächenunterschied zwischen der ersten Druckwaagenfläche 31 und der zweiten Druckwaagenfläche 33 in einfacher Weise an dem Steuerkolben 7 realisieren. Je kleiner ein Durchmesser der Ringstufe 143 gewählt ist, um so kleiner wird die von der Kante 35 umschriebene Fläche und damit die erste Druckwaagenfläche 31.

Sobald der Steuerkolben 7 durch einen in dem Druckraum 15 herrschenden Druck gegen die Kraft der Feder 29 nach links verschoben wird, wird eine Verbindung zwischen dem Druckraum 15 und dem Booster-Kanal 41 freigegeben. Der in dem Druckraum 15 herrschende Druck wird somit -wie bereits erwähnt- abgebaut. Trotz des geöffneten Sitzventils 39 liegt der in dem Druckraum 15 herrschende Druck an der ersten Druckwaagenfläche 31 an. Der in dem Booster-Kanal 41 herrschende niedrigere Druck liegt weiterhin an der Ringfläche 147 an, so daß ein Öffnen des Sitzventils 39 nicht zu einer Vergrößerung der ersten Druckwaagenfläche 31 führt. Dies ergibt sich insbesondere dadurch, daß das in der Druckkammer 15 unter Druck stehende Medium in den Booster-Kanal 41 abströmt, ohne die Ringfläche 147 mit einem zusätzlichen Druck zu beaufschlagen. Dies wird dadurch begünstigt, daß die Ringfläche 147 einen, vom Strömungsweg weggerichteten, konischen Verlauf aufweist.

Zur Funktion des anhand der Figuren 1 bis 6 erläuterten Stromregelventils ist folgendes festzuhalten:

Eine Lenkhelfpumpe liefert über den Druckkanal 13 ein unter Druck stehendes Medium, welches der Betätigung des Verbrauchers beziehungsweise des Lenkgetriebes dient. Da die Lenkhelfpumpe mit der Brennkraftmaschine des Kraftfahrzeugs verbunden ist, wird die Fluidmenge von der aktuellen Drehzahl der Brennkraftmaschine stark beeinflußt. Das Stromregelventil dient dazu, dem Lenkgetriebe einen auf beispielsweise 8 l/min begrenzten Fluidstrom zuzuführen. Dabei dient die von dem Fortsatz 17 durchdrungene Öffnung 21 als Förderstromdrossel. Links von der Öffnung 21, in der ersten Druckkammer 15, herrscht der von der Lenkhelfpumpe aufgebaute Druck. Rechts von der Förderstromdrossel beziehungsweise Öffnung 21, im Innenraum 23 des Verbindungsstopfens 11, herrscht lediglich der dem Lenkgetriebe zugeordnete Druck. Dieser Druck wird über den Durchgangskanal 17 und die als Vorsteuerdrossel 25 beziehungsweise Dämpfungsdüse dienende kleine Öffnung in den in den Innenraum 23 ragenden Fortsatz 19 zur zweiten Druckkammer 27 übertragen, so daß dieser Druck auf die linke Seite des Steuerkolbens, nämlich auf die zweite Druckwaagenfläche 33 wirkt. Rechts wirkt dagegen der in der ersten Druckkammer 15 herrschende Pumpendruck auf die rechte Stirnseite des Steuerkolbens, nämlich auf die erste Druckwaagenfläche 31. Zusätzlich wird der Steuerkolben 7 durch die Schraubenfeder 29 nach rechts gedrängt, so daß die Fluid-Verbindung zwischen der ersten Druckkammer 15 und dem Booster-Kanal 41 unterbrochen ist. Sobald der Steuerkolben 7 aufgrund eines steigenden Drucks in der ersten Druckkammer 15 gegen die Kraft der Schraubenfeder 29 und gegen die in der zweiten Druckkammer 27 herrschende Druckkraft nach links verlagert wird, öffnet sich bei den Ausführungsbeispielen gemäß den Figuren 1 bis 4 und 6 das Sitzventil. Nach dem Öffnen des Sitzventils verhalten sich die in den Figuren 1, 2 und 6 dargestellten Stromregelventile als reine Stizventile; die Stromregelventile der Figuren 3 und 4 dagegen als Schieberventile während die rechte Kante des Steuerkolbens die Mündungsöffnung des Booster-Kanals 41 überstreicht, so daß letztere als Sitz-Schieberventile bezeichnet werden. Bei dem als reines Schieber-Ventil wirkenden Ausführungsbeispiel gemäß Figur 5 überschreitet bei einer Verlagerung des Steuerkolbens schließlich die Kante 35 die Mündungsfläche des Booster-Kanals 41, so daß auch hier die Fluid-Verbindung zwischen diesem Kanal und der ersten Druckkammer 15 freigegeben und ein weiterer Druckaufbau und ein weiteres Ansteigen des Fluidstroms von der Lenkhelfpumpe zum Lenkgetriebe verhindert wird.

Der als Druckwaage wirkende Steuerkolben 7 befindet sich im Gleichgewicht, wenn die von links und rechts auf ihn wirkenden Kräfte sich gegenseitig aufheben, das heißt, die Summe aller Kräfte Null ist. Es gilt daher die folgende Gleichung:

$$\Sigma\, F = 0 = a\,(p_{Pumpe} - p_{system}) - F_{Feder} - (A - a)\, p_{system}$$

Mit a wird die erste Druckwaagenfläche 31 angegeben. Mit $p_{Pumpe}$ wird der von der Lenkhelfpumpe erzeugte in der ersten Druckkammer 15 herrschende Druck bezeichnet. $p_{system}$ kennzeichnet den sogenannten Systemdruck, nämlich den dem Lenkgetriebe zugeführten Druck, der auch im Innenraum 23 des Verbindungsstopfens 11 wirkt.

Mit $F_{Feder}$ wird die von der Schraubenfeder 29 auf den Steuerkolben 7 beziehungsweise 107 ausgeübte Kraft bezeichnet. A steht für die zweite Druckwaagenfläche 33.

Aus der Gleichung wird ersichtlich, daß ein Anteil $(A - a)\, p_{system}$ gegeben ist, der durch die Differenz zwischen der Größe der ersten Druckwaagenfläche 31 und der Größe der zweiten Druckwaagenfläche 33 gebildet wird. Diese Differenz definiert quasi eine Ringfläche, die der Differenz der beiden Druckwaagenflächen 31 und 33 entspricht. Diese Ringfläche wird mit dem Systemdruck beaufschlagt.

Die hier wiedergegebene Gleichnung läßt erkennen, daß die Druckwaage von dem Systemdruck beeinflußt wird. Es ergibt sich also eine systemdruckabhängige Regelung, bei der der Abregelbeginn durch die mit Hilfe der Differenz $(A - a)$ bestimmte Ringfläche bestimmbar ist.

Während also bei einer wegabhängigen oder staudruckabhängigen Regelung des dem Lenkgetriebe zugeführten Fluiddrucks der Abregelbeginn immer gleich bleibt, besteht bei dem Stromregelventil gemäß den Figuren 1 bis 6 die Möglichkeit, den Abregelbeginn durch die Größendifferenz zwischen der ersten Druckwaagenfläche 31 und der zweiten Druckwaagenfläche 33 zu bestimmen. Dabei kann bei Bedarf auch -anders als hier beschrieben- eine Ausführungsform des Stromregelventils realisiert werden, bei der die linke beziehungsweise zweite Druckwaagenfläche 33 kleiner ist als die rechte beziehungsweise erste Druckwaagenfläche 31. Bei einer derartigen Ausgestaltung öffnet das Ventil bei höherem Druck früher beziehungsweise bei kleinerem Druck später als bei herkömmlichen Ventilen, bei denen beide Druckwaagenflächen gleich groß sind.

Bei den Ausführungsbeispielen gemäß den Figuren 1, 2 und 6 beziehungsweise 4 und 5 wirkt sich der Größenunterschied zwischen den Druckwaagenflächen sowohl beim ersten Ansprechen des Stromregelventils als auch beim weiteren Regelbetrieb des Ventils aus. Bei dem Ausführungsbeispiel gemäß Figur 3 wirkt sich dagegen der Größenunterschied zwischen den Druckwaagenflächen 31 und 33 nur bis zum Ansprechen des Ventils aus. Sobald das dort beschriebene Sitzventil öffnet, ist die dem Pumpendruck ausgesetzte rechte Stirnfläche des Steuerkolbens 107 genauso groß wie die linke Stirnfläche des Kolbens, die mit dem Systemdruck beziehungsweise dem im Innenraum 23 herrschenden Druck beaufschlagt ist.

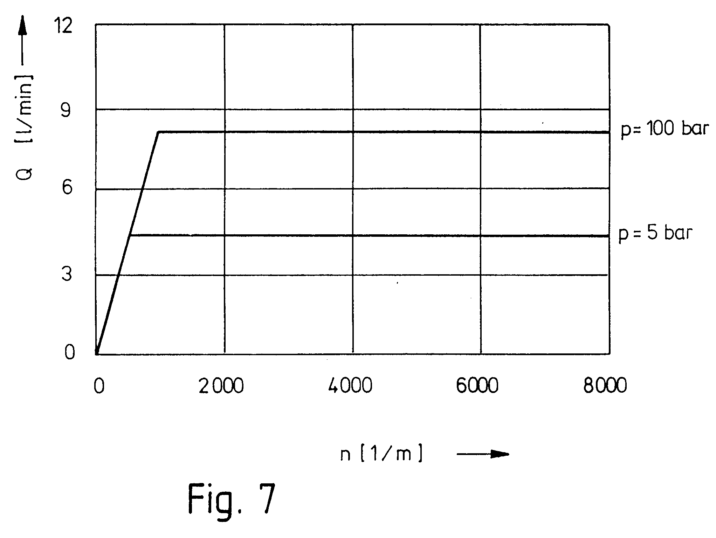

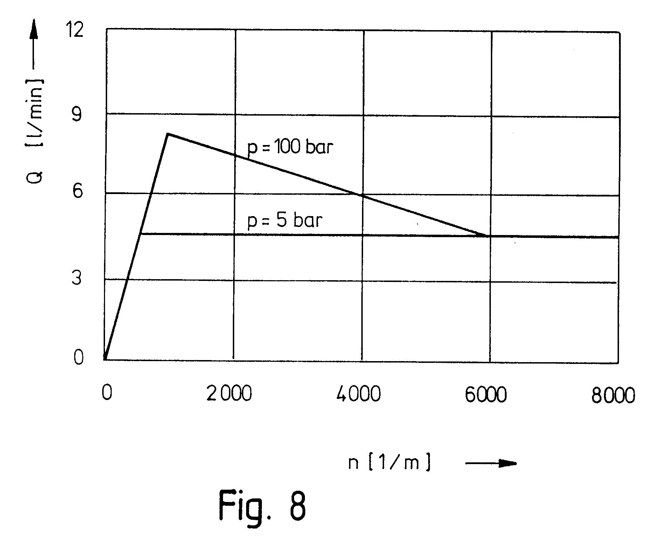

Das Verhalten der anhand der Figuren 1 bis 6 erläuterten Stromregelventile wird im folgenden anhand der Figuren 7 und 8 näher dargestellt. Dabei zeigt Figur 7 den von einer Lenkhelfpumpe erzeugten Volumenstrom Q, gemessen in l/min, über der Drehzahl n, angegeben in 1/min, einer die Lenkhelfpumpe antreibenden Brennkraftmaschine. Der in der oben dargestellten Gleichung mit $p_{system}$ gekennzeichnete Systemdruck wird in der Darstellung gemäß Figur 7 abgekürzt mit p bezeichnet.

Aus der Darstellung ist ersichtlich, daß der von der Lenkhelfpumpe geförderte Volumenstrom Q mit ansteigender Drehzahl auf maximal 8 l/min ansteigt, dann auch bei zunehmender Drehzahl konstant bleibt. Das Stromregelventil der Lenkhelfpumpe ist so ausgelegt, daß bei diesem Volumenstrom der Steuerkolben ausgelenkt wird aus seiner in den Figuren 1, 2, 4 , 5 und 6 dargestellten Ruheposition und sich nach links bewegt, wodurch die Fluidverbindung zwischen dem Druckkanal 13 und dem Booster-Kanal 41 geöffnet wird. Ein weiteres Ansteigen des Volumenstroms Q wird dadurch vermieden.

Das Diagramm gemäß Figur 7 zeigt, daß bei einem Systemdruck von p = 5 bar der Steuerkolben 7 bereits bei einem Volumenstrom von ca. 5 l/min anspricht und auch bei steigender Drehzahl n eine weitere Zunahme des Volumenstroms nicht eintritt.

Es zeigt sich also, daß bei einem Systemdruck von p = 100 bar eine Regelung des Volumenstroms auf ca. 8 l/min eintritt und bei einem Systemdruck von p = 5 bar auf 5 l/min.

Die Zahlenwerte für den Volumenstrom und für den Systemdruck sind hier nur beispielhaft anzunehmen. Wesentlich ist, daß -anders als beim Stand der Technik- nicht nur ein einziger Abregelpunkt gegeben ist, der bei bekannten Systemen immer auf den höheren Wert festgelegt ist, also auf beispielsweise 8 l/min, sondern daß hier in Abhängigkeit vom Systemdruck mehrere Abregelpunkte gegeben sind und damit eine unnötige Förderung des Fluids zum Lenkgetriebe vermieden wird.

Figur 8 zeigt in einem ähnlichen Diagramm wie Figur 7 den von einer Lenkhelfpumpe geförderten Volumenstrom Q, gemessen in l/min, über der Drehzahl n, angegeben in 1/min, einer die Lenkhelfpumpe antreibenden Brennkraftmaschine. Der Graph zeigt auch hier zwei verschiedene Zweige, wobei ein erster Zweig charakteristisch ist für einen Systemdruck, der hier mit p angegeben ist, von p = 100 bar, und einen zweiten Zweig für einen Systemdruck von p = 5 bar.

Der von der Lenkhelfpumpe geförderte Volumenstrom steigt mit zunehmender Drehzahl bei einem Systemdruck von p = 100 bar auf beispielsweise 8 l/min an und wird dann mit zunehmender Drehzahl abgeregelt auf beispielsweise 5 l/min, wobei der letztere Wert bei etwa 6000 Umdrehungen der Brennkraftmaschine erreicht ist.

Bei einem Systemdruck von p = 5 bar spricht der Steuerkolben des Stromregelventils bereits bei einem Volumenstrom von Q = 5 l/min an und regelt den Volumenstrom auf einen konstanten, über einer wachsenden Drehzahl gleichbleibenden Wert von 5 l/min.

Dieses Diagramm gilt für die in Figur 3 dargestellte Ausführungsform des Stromregelventils, das bis zum Öffnen des Sitzventils, also bis zu einer ersten Verlagerung des Steuerkolbens durch zwei verschieden große Druckwaagenflächen charakterisiert ist. Nach dem ersten Öffnen des von dem Steuerkolben beziehungsweise dessen rechter Kante gebildeten Sitzventils sind dessen Druckwaagenflächen gleich groß, so daß sich hier ein gegenüber Figur 7 abweichendes Regelverhalten einstellt.

Wesentlich ist jedoch auch hier, daß -im Gegensatz zum Stand der Technik, wo lediglich ein einziger Betriebsbeziehungsweise Abregelpunkt für alle sich ergebenden Systemdruckwerte gegeben ist- verschiedene vom Systemdruck abhängige Abregelpunkte vorhanden sind, nämlich ein Abreglepunkt bei einem höheren Volumenstrom bei einem hohen Systemdruck und ein zweiter Abregelpunkt bei einem niedrigeren Volumenstrom bei einem niedrigeren Systemdruck. Bei Zwischenwerten des Systemdrucks ergeben sich entsprechende Abregelpunkte.

Auch hier sind alle Zahlenwerte lediglich beispielhaft gewählt. Es kommt allein auf das charakteristische Verhalten des Stromregelventils gemäß Figur 3 an.

Figuren 7 und 8 zeigen also prägnant, daß aufgrund der verschieden großen Druckwaagenflächen des Steuerkolbens das in den Figuren 1 bis 6 dargestellte Stromregelventil die Vorgabe verschiedener Betriebbeziehungsweise Abregelpunkte ermöglicht. Das heißt, bei einem niedrigeren Systemdruck kann sich bereits ein Abregelpunkt einstellen, der bei Lenkhelfpumpen gemäß des Standes der Technik nicht realisierbar ist. Dort ist nur ein einziger Abregelpunkt vorhanden, wie oben im einzelnen ausgeführt.

Es zeigt sich also, daß die Beeinflussung des Regelverhaltens bei den verschiedensten Stromregel ventil-Typen durch die Wahl der Größe der Druckwaagenflächen möglich ist, daß also der hier vorgeschlagene Regelgedanke allgemein verwendet werden kann.

## Patentansprüche

1. Stromregelventil für Lenkhelfpumpen mit einem innerhalb einer Ventilbohrung beweglichen Steuerkolben, der mindestens zwei mit unterschiedlichen Druckniveaus beaufschlagbare Druckwaagenflächen aufweist, wobei die erste Druckwaagenfläche (31) mit dem von der Lenkhelfpumpe erzeugten Druck und die zweite Druckwaagenfläche (33) von dem dem Lenkgetriebe zugeführten Druck beaufschlagbar ist und die erste Druckwaagenfläche (31) kleiner ist als die zweite Druckwaagenfläche (33), **dadurch gekennzeichnet**, daß die zweite Druckwaagenfläche (33) über einen den Steuerkolben (7) durchdringenden Druckkanal (17) mit dem dem Lenkgetriebe zugeführten Druck beaufschlagbar ist.

2. Stromregelventil nach Anspruch 1, **dadurch gekennzeichnet**, daß der Druckkanal (17) mit einer Vorsteuerdrossel (25) ausgestattet ist.

3. Stromregelventil nach Anspruch 1 oder 2, **gekennzeichnet durch** ein als Schraubenfeder (29) ausgebildetes Federelement, das den Steuerkolben (7; 107) mit einer Druckkraft beaufschlagt, die mit dem auf die zweite Druckwaagenfläche (33) wirkenden Druck in gleicher Richtung wirkt.

4. Stromregelventil nach einem der vorhergehenden Ansprüche, **dadurch gekennzeichnet**, daß der Steuerkolben (7; 107) Teil einer den von der Lenkhelfpumpe an das Lenkgetriebe abgegebenen Steuerstrom beeinflussenden Förderstromdrossel (Öffnung (21)) ist.

5. Stromregelventil nach einem der vorhergehenden Ansprüche, **dadurch gekennzeichnet**, daß der Steuerkolben (7; 107) in Ruhelage eine zwischen einer mit dem von der Pumpe gelieferten Förderstrom beaufschlagten ersten Druckkammer (15) und einem Bereich niedrigen Druckniveaus bestehende Fluid-Verbindung verschließt.

6. Stromregelventil nach Anspruch 5, **dadurch gekennzeichnet**, daß die Fluid-Verbindung durch ein Sitzventil (39; 139) verschließbar ist.

7. Stromregelventil nach Anspruch 5, **dadurch gekennzeichnet**, daß die Fluid-Verbindung durch ein Schieber-Ventil verschließbar ist.

8. Stromregelventil nach Anspruch 7, **dadurch gekennzeichnet**, daß die Außenfläche des Steuerkolbens (7) einen ersten Bereich (43, 143) mit einem ersten Außendurchmesser und einem zweiten Bereich (45) mit einem zweiten Außendurchmesser aufweist.

9. Stromregelventil nach Anspruch 8, **dadurch gekennzeichnet**, daß der Bereich (143) in den Bereich (45) über eine konisch verlaufende Ringfläche (147) übergeht.

10. Stromregelventil nach einem der vorhergehenden Ansprüche, **dadurch gekennzeichnet**, daß die den Steuerkolben (7) aufnehmende Ventilbohrung (105) als Stufenbohrung ausgebildet ist, deren Innendurchmesser auf die Außendurchmesser des Steuerkolbens (7) abgestimmt sind.

11. Stromregelventil nach Anspruch 5, **dadurch gekennzeichnet**, daß die Fluid-Verbindung durch ein Sitz-Schieber-Ventil verschließbar ist.

## Claims

1. A flow regulating valve for power steering pumps, having a control piston which is movable within a valve bore and has at least two pressure governor surfaces able to be acted upon with different pressure levels, the first pressure governor surface (31) being able to be acted upon with the pressure generated by the power steering pump and the second pressure governor surface (33) being able to be acted upon by the pressure supplied to the steering gear and the first pressure governor surface (31) being smaller than the second pressure governor surface (33), characterised in that the pressure supplied to the steering gear can act upon the second pressure governor surface (33) via a pressure channel (17) passing through the control piston (7).

2. A flow regulating valve in accordance with Claim 1, characterised in that the pressure channel (17) is provided with a pilot choke (25).

3. A flow regulating valve in accordance with Claim 1 or 2, characterised by a spring member in the form of a helical spring (29) which acts upon the control piston (7; 107) with a pressure acting in the same direction as the pressure acting on the second pressure governor surface (33).

4. A flow regulating valve in accordance with any one of the preceding Claims, characterised in that the control piston (7; 107) is part of a discharge choke (opening 21) influencing the control flow issued from the power steering pump to the steering gear.

5. A flow regulating valve in accordance with any one of the preceding Claims, characterised in that in the at rest position, the control piston (7; 107) closes a fluid connection present between a first pressure chamber (15) acted upon with the discharge delivered by the pump and a region having a low pressure level.

6. A flow regulating valve in accordance with Claim 5, characterised in that the fluid connection can be closed by a seat valve (39; 139).

7. A flow regulating valve in accordance with Claim 5, characterised in that the fluid connection can be closed by a sliding valve.

8. A flow regulating valve in accordance with Claim 7, characterized in that the outer surface of the control piston (7) has a first region (41, 143) with a first external diameter and a second region (45) with a second external diameter.

9. A flow regulating valve in accordance with Claim 8, characterised in that the region (143) becomes the region (45) via an outwards-flaring annular surface (147).

10. A flow regulating valve in accordance with any one of the preceding Claims, characterised in that the valve bore (105) receiving the control piston (7) is in the form of a stepped bore whose internal diameters are matched to the external diameters of the control piston (7).

11. A flow regulating valve in accordance with Claim 5, characterised in that the fluid connection can be sealed by means of a seat-sliding valve.

## Revendications

1. Soupape de réglage de débit pour pompes de direction assistée, avec un piston de commande mobile à l'intérieur d'un alésage de soupape et présentant au moins deux faces de compensateur de pression pouvant être sollicitées par des niveaux de pression différents, la première face de compensateur de pression (31) pouvant être sollicitée par la pression produite par la pompe de direction assistée et la deuxième face de compensateur de pression (33) par la pression apportée au mécanisme de direction, et la première face de compensateur de pression (31) étant plus petite que la deuxième face de compensateur de pression (33), **caractérisée** en ce que la deuxième face de compensateur de pression (33) peut, par l'intermédiaire d'un canal de pression (17) traversant le piston de commande (7), être sollicitée par la pression apportée au mécanisme de direction.

2. Soupape de réglage de débit selon la revendication 1, **caractérisée** en ce que le canal de pression (17) est équipé d'un étranglement de pilotage (25).

3. Soupape de réglage de débit selon la revendication 1 ou 2, **caractérisée** par un élément de ressort réalisé sous forme de ressort à boudin (29), qui sollicite le piston de commande (7 ; 107) avec une force de pression qui agit dans la même direction que la pression agissant sur la deuxième face de compensateur de pression (33).

4. Soupape de réglage de débit selon une des revendications précédentes, **caractérisée** en ce que le piston de commande (7 ; 107) fait partie d'un étranglement de débit (orifice 21) agissant sur le débit de commande délivré par la pompe de direction assistée au mécanisme de direction.

5. Soupape de réglage de débit selon une des revendications précédentes, **caractérisée** en ce que le piston de commande (7 ; 107), en position de repos, ferme une liaison fluidique existante entre une première chambre de pression (15), alimentée par le débit fourni par la pompe, et une région de plus bas niveau de pression.

6. Soupape de réglage de débit selon la revendication 5, **caractérisée** en ce que la liaison fluidique peut être fermée par une soupape à siège (39 ; 139).

7. Soupape de réglage de débit selon la revendication 5, **caractérisée** en ce que la liaison fluidique peut être fermée par une soupape à tiroir.

8. Soupape de réglage de débit selon la revendication 7, **caractérisée** en ce que la face extérieure du piston de commande (7) présente une première région (43, 143) avec un premier diamètre extérieur et une deuxième région (45) avec un deuxième diamètre extérieur.

9. Soupape de réglage de débit selon la revendication 8, **caractérisée** en ce que la région (143) se raccorde à la région (45) par une face annulaire (147) d'allure conique.

10. Soupape de réglage de débit selon une des revendications précédentes, **caractérisée** en ce que l'alésage de soupape (105) recevant le piston de commande (7) est réalisé sous forme d'alésage échelonné, dont les diamètres intérieurs sont adaptés aux diamètres extérieurs du piston de commande (7).

11. Soupape de réglage de débit selon la revendication 5, **caractérisée** en ce que la liaison fluidique peut être fermée par une soupape à siège et tiroir.

Fig. 1

EP 0 636 529 B1

Fig. 2

Fig. 3

Fig. 4

EP 0 636 529 B1

Fig. 5

Fig. 6

Fig. 7

Fig. 8